# EUROPEAN PATENT APPLICATION

(11) **EP 4 797 522 A1**
(43) Date of publication of application: **26.08.2026**
(21) Application number: 23956025.3
(22) Date of filing: 17.10.2023
(51) Int. Cl.: H02M 7/49

(54) **ELECTRIC POWER CONVERSION DEVICE**

(71) Applicant: TMEIC Corporation, Tokyo 104-0031 (JP)
(72) Inventor: KOBORI, Kohei, Tokyo 104-0031 (JP); SUGIYAMA, Takashi, Tokyo 104-0031 (JP)
(74) Representative: Winter, Brandl - Partnerschaft mbB
(86) International application number: PCT/JP2023/037499
(87) International publication number: WO 2025/083772

(57) **Abstract**

The present power conversion device (1) includes a plurality of unit converters (5) connected in series, and includes an arm (A1 - A3) connected to an AC power supply (8) and a control device (7) that controls the arm. Each unit converter includes a capacitor (15). The control device includes a tester (53) that is provided so as to correspond to a respective one of the unit converters and tests the corresponding capacitor. The tester determines that the corresponding capacitor needs to be replaced with a new capacitor when a voltage (VPP) of an AC component (Vac) contained in an inter-terminal voltage (VDC) of the corresponding capacitor is higher than a threshold voltage (Vt). Thus, it can be determined whether each of the capacitors needs to be replaced with a new capacitor while the power conversion device is being operated.

## Description

### TECHNICAL FIELD

The present disclosure relates to a power conversion device, and particularly to a power conversion device including a plurality of unit converters connected in series.

### BACKGROUND ART

For example, WO 2018/193606 (PTL 1) discloses a power conversion device including a power converter connected to an alternating current (AC) power supply and a control device that controls the power converter. The power converter includes a plurality of unit converters connected in series. Each unit converter includes a capacitor that accumulates direct current (DC) power, a rectification element that converts AC power supplied from the AC power supply into DC power and supplies the DC power to the capacitor, and a switching element that converts the DC power of the capacitor into AC power and supplies the AC power to the AC power supply.

### CITATION LIST

### PATENT LITERATURE

PTL 1: WO 2018/193606

### SUMMARY OF INVENTION

### TECHNICAL PROBLEM

Such a conventional power conversion device, however, is problematic in that a plurality of capacitors included in a plurality of unit converters deteriorate over time and performance of the device is lowered accordingly.

There is a method to address this, in which the operation of a power conversion device is stopped regularly and the capacitance value of each capacitor is measured, and a capacitor with deterioration is replaced with a new one. However, this method is problematic in that it takes more time to measure the capacitance values of the plurality of capacitors and the operation of the device is stopped for a longer time.

Thus, a main object of the present disclosure is to provide a power conversion device that can determine whether each of a plurality of capacitors included in a plurality of unit converters needs to be replaced with a new one while the power conversion device is being operated.

### SOLUTION TO PROBLEM

A power conversion device of the present disclosure includes a power converter and a control device. The power converter includes a plurality of unit converters connected in series and is connected to an AC power supply. The control device transmits a control signal to each of the plurality of unit converters.

Each of the plurality of unit converters includes a main circuit, a voltage sensor, and a drive circuit. The main circuit includes a capacitor that accumulates DC power, a rectification element that converts AC power supplied from the AC power supply into DC power and supplies the DC power to the capacitor, and a switching element that converts the DC power of the capacitor into AC power and supplies the AC power to the AC power supply. The voltage sensor detects an inter-terminal voltage of the capacitor. The drive circuit drives the switching element in accordance with a control signal. The inter-terminal voltage of the capacitor contains a DC component and an AC component.

The control device includes a controller and a plurality of testers. The controller generates a control signal so that the inter-terminal voltage of the capacitor detected by the voltage sensor equals a reference DC voltage and an AC output voltage of the power converter equals a reference AC voltage. The plurality of testers are provided so as to respectively correspond to the plurality of unit converters, each of the plurality of testers testing the capacitor included in the unit converter to which the tester corresponds. Each of the plurality of testers includes a determinator that determines that the capacitor corresponding to the tester needs to be replaced with a new capacitor when a voltage of the AC component contained in the inter-terminal voltage of the capacitor corresponding to the tester is higher than a threshold voltage.

### ADVANTAGEOUS EFFECTS OF INVENTION

In the power conversion device of the present disclosure, the tester is provided so as to correspond to a respective one of the unit converters, and when the voltage of the AC component contained in the inter-terminal voltage of the corresponding capacitor is higher than the threshold voltage, this tester determines that the corresponding capacitor needs to be replaced with a new one. Thus, it can be determined whether each of the plurality of capacitors included in the plurality of unit converters needs to be replaced with a new one while the power conversion device is being operated.

### BRIEF DESCRIPTION OF DRAWINGS

Fig. 1 is a circuit block diagram illustrating a configuration of a power conversion device according to an embodiment of the present disclosure.
Fig. 2 is a circuit block diagram illustrating a configuration of a unit converter shown in Fig. 1.
Fig. 3 presents time charts, each illustrating a waveform of an inter-terminal voltage of a capacitor shown in Fig. 2.
Fig. 4 presents other time charts, each illustrating a waveform of the inter-terminal voltage of the capacitor shown in Fig. 2.
Fig. 5 is a block diagram illustrating a configuration of a control device shown in Fig. 1.
Fig. 6 is a block diagram illustrating a configuration of a control circuit shown in Fig. 5.
Fig. 7 is a circuit block diagram for explaining initial charging of the capacitor shown in Fig. 2.
Fig. 8 is a block diagram illustrating a configuration of a tester shown in Fig. 6.
Fig. 9 is a time chart for explaining operation of an estimator shown in Fig. 8.
Fig. 10 is a flowchart illustrating a testing method of the capacitor.

### DESCRIPTION OF EMBODIMENTS

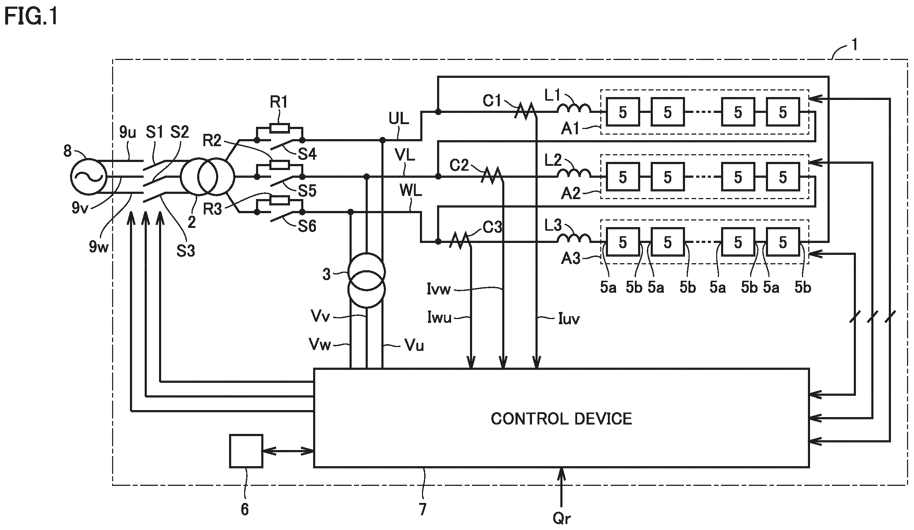

Fig. 1 is a circuit block diagram illustrating a configuration of a power conversion device 1 according to an embodiment of the present disclosure. In Fig. 1, this power conversion device 1 is connected to power transmission lines 9u, 9v, and 9w for allowing three-phase AC power to be supplied from a commercial AC power supply 8 to a load and is used as a reactive power compensation device that compensates for reactive power caused in the load or the like.

This power conversion device 1 includes switches S1 to S6, transformers 2 and 3, current limiting resistors R1 to R3, AC lines UL, VL, and WL, current transformers C1 to C3, reactors L1 to L3, arms A1 to A3, an operation unit 6, and a control device 7.

Switches S1 to S3 each have one terminal connected to a respective one of power transmission lines 9u, 9v, and 9w and the other terminal connected to a respective one of three primary windings of transformer 2. Controlled by control device 7, switches S1 to S3 are turned on at a normal time and turned off at a testing or maintenance time of power conversion device 1. Transformer 2 includes the three primary windings and three secondary windings, and gives and receives the three-phase AC power.

One terminal of each of current limiting resistors R1 to R3 is connected to a respective one of the three secondary windings of transformer 2 while the other terminals thereof are each connected to a respective one of one terminals of AC lines UL, VL, and WL. Current limiting resistors R1 to R3 limit respective currents flowing from commercial AC power supply 8 to arms A1 to A3 at a start-up time of power conversion device 1.

Switches S4 to S6 are connected in parallel to current limiting resistors R1 to R3, respectively. Controlled by control device 7, switches S4 to S6 are turned on after the currents flowing through arms A1 to A3 at the start-up time of power conversion device 1 stabilize. To control device 7, transformer 3 feeds back three-phase AC voltages Vu, Vv, and Vw of values dependent on the AC voltages of AC lines UL, VL, and WL.

Reactor L1 and arm A1 are connected in series between AC line UL and AC line VL. Reactor L2 and arm A2 are connected in series between AC line VL and AC line WL. Reactor L3 and arm A3 are connected in series between AC line WL and AC line UL. That is, arms A1 to A3 are delta-connected. Controlled by control device 7, arms A1 to A3 (power converters) generate three-phase AC power.

Each of arms A1 to A3 includes N unit converters 5 connected in series. Each of N unit converters 5 generates AC power in accordance with a control signal from control device 7. N represents an integer being two or more, which is 60 for example.

A first terminal 5a of unit converter 5 in the first stage in arm A1 is connected to one terminal of reactor L1. In arm A1, respective second terminals 5b of unit converters 5 in the stages other than the last stage are each connected to first terminal 5a of adjoining unit converter 5. Second terminal 5b of unit converter 5 in the last stage in arm A1 is connected to one terminal of reactor L2.

First terminal 5a of unit converter 5 in the first stage in arm A2 is connected to the other terminal of reactor L2. In arm A2, respective second terminals 5b of unit converters 5 in the stages other than the last stage are each connected to first terminal 5a of adjoining unit converter 5. Second terminal 5b of unit converter 5 in the last stage in arm A2 is connected to one terminal of reactor L3.

First terminal 5a of unit converter 5 in the first stage in arm A3 is connected to the other terminal of reactor L3. In arm A3, respective second terminals 5b of unit converters 5 in the stages other than the last stage are each connected to first terminal 5a of adjoining unit converter 5. Second terminal 5b of unit converter 5 in the last stage in arm A3 is connected to the other terminal of reactor L1.

Reactors L1 to L3 control circulating currents flowing to arms A1 to A3, respectively. Reactors L1 to L3 may be provided separately from arms A1 to A3 or may be inductance components of arms A1 to A3. Current transformers C1 to C3 detect AC currents Iuv, Ivw, and Iwu flowing to arms A1 to A3 and feed the detected currents Iuv, Ivw, and Iwu back to control device 7, respectively.

Operation unit 6 includes a plurality of buttons operated by a user of power conversion device 1, an image display displaying various kinds of information, and the like. By the user operating operation unit 6, it is enabled to set the various kinds of information and to start and stop power conversion device 1. Operation unit 6 outputs a signal indicating the detail of the operation to control device 7.

Control device 7 turns switches S1 to S3 on and off in accordance with a signal from operation unit 6. Further, control device 7 controls each of three arms A1 to A3 (that is, each of 3 × N unit converters 5) by generating a control signal GC, a control signal GB, an ON command signal Son, which are described later, and the like according to a reactive power command value Qr, three-phase AC voltages Vu, Vv, and Vw, three-phase AC currents Iuv, Ivw, and Iwu, a DC voltage VDC, which is described later, and the like.

Reactive power command value Qr is given from, for example, a central control room (not illustrated) of a power system including commercial AC power supply 8. Power conversion device 1 supplies reactive power of a value dependent on reactive power command value Qr to power transmission lines 9u, 9v, and 9w.

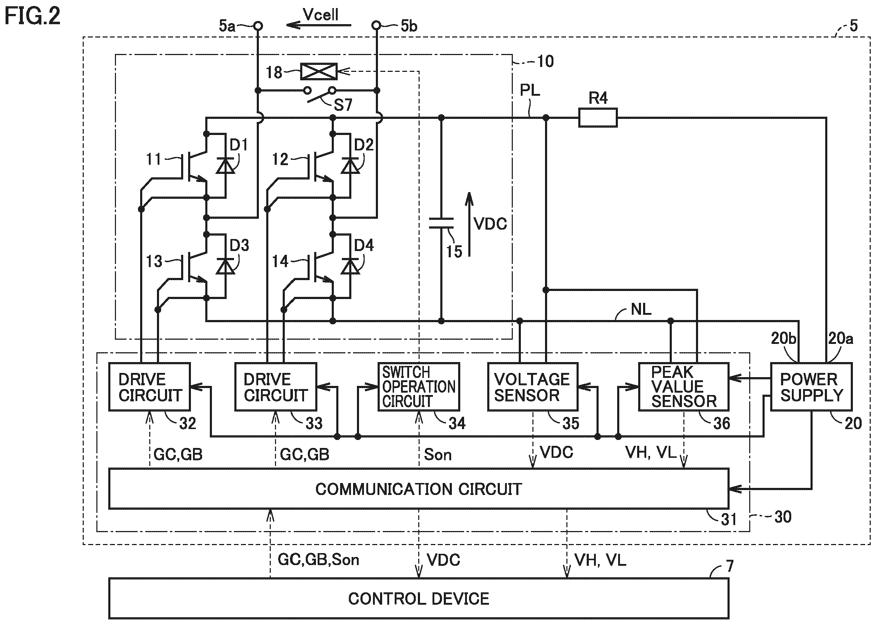

Fig. 2 is a circuit block diagram illustrating a configuration of unit converter 5 shown in Fig. 1. In Fig. 2, unit converter 5 includes a main circuit 10, a resistance element R4, a power supply 20, and a control circuit 30. Main circuit 10 is configured of a full-bridge circuit including a capacitor.

Specifically, main circuit 10 includes switching elements 11 to 14, diodes (rectification elements) D1 to D4, and a capacitor 15. Main circuit 10 converts DC power into AC power by outputting a voltage pulse of an amplitude dependent on inter-terminal voltage VDC of capacitor 15 to between first terminal 5a and second terminal 5b according to the on and off states of switching elements 11 to 14.

Each of switching elements 11 to 14 is a self-arc-extinguishing power semiconductor element and is configured of, for example, an insulated gate bipolar transistor (IGBT). Switching elements 11 and 13 are connected in series between a DC line PL and a DC line NL. Switching elements 12 and 14 are connected in series between DC line PL and DC line NL. The collectors of switching elements 11 and 12 are both connected to DC line PL and the emitters of switching elements 13 and 14 are both connected to DC line NL. The connection point of the emitter of switching element 11 and the collector of switching element 13 is connected to first terminal 5a. The connection point of the emitter of switching element 12 and the collector of switching element 14 is connected to second terminal 5b.

Diodes D1 to D4 are respectively connected to switching elements 11 to 14 inversely in parallel. Capacitor 15 is connected between DC line PL and DC line NL and accumulates DC power.

The conduction states (the on and off states) of switching elements 11 to 14 are controlled by control circuit 30. Switching elements 11 and 13 are turned on and off mutually complementarily. Switching elements 12 and 14 are turned on and off mutually complementarily. As illustrated in Fig. 2, when a voltage to first terminal 5a relative to second terminal 5b is defined as a cell voltage Vcell, cell voltage Vcell is controlled according to the on and off states of each of switching elements 11 to 14.

Specifically, when switching elements 11 and 14 are both turned on and switching elements 12 and 13 are both turned off, cell voltage Vcell is equal to inter-terminal voltage VDC of capacitor 15. When switching elements 11 and 12 are both turned on and switching elements 13 and 14 are both turned off, cell voltage Vcell is 0 V. When switching elements 11 and 12 are both turned off and switching elements 13 and 14 are both turned on, cell voltage Vcell is 0 V. When switching elements 11 and 14 are both turned off and switching elements 12 and 13 are both turned on, cell voltage Vcell is equal to a voltage obtained by reversing the polarity of inter-terminal voltage VDC of capacitor 15.

Although an example in which main circuit 10 is configured of a full-bridge circuit is described with Fig. 2, it is not limited thereto. For example, main circuit 10 may be configured of a half-bridge circuit.

The overall voltage of each of arms A1 to A3 amounts to the sum of cell voltages Vcell of N unit converters 5 included in each of arms A1 to A3. Thus, through control based on the on and off states of each of switching elements 11 to 14 of each unit converter 5, the overall voltage of each of arms A1 to A3 can be controlled.

Main circuit 10 further includes a switch S7. Switch S7 is connected between first terminal 5a and second terminal 5b. Switch S7 is configured so that it can cause first terminal 5a and second terminal 5b to be short-circuited by being closed in accordance with a command from control circuit 30.

Resistance element R4 is connected between DC line PL and an input terminal 20a of power supply 20. Resistance element R4 lowers inter-terminal voltage VDC of capacitor 15 and supplies the resultant voltage to power supply 20, and limits a current flowing from capacitor 15 to power supply 20.

An input terminal 20b of power supply 20 is connected to DC line NL. Power supply 20 further lowers a DC voltage Vin supplied from capacitor 15 via resistance element R4 and generates a power supply voltage of control circuit 30. That is, each unit converter 5 forms a self-sufficient cell where power can be supplied from main circuit 10 to control circuit 30.

Control circuit 30 includes a communication circuit 31, drive circuits 32 and 33, a switch operation circuit 34, a voltage sensor 35, and a peak value sensor 36. Control circuit 30 is driven with a power supply voltage supplied from power supply 20, and gives and receives signals to and from control device 7 and controls main circuit 10.

Communication circuit 31 communicates with control device 7 via a communication line (not illustrated). That is, communication circuit 31 receives control signal GC for controlling switching elements 11 to 14 and control signal GB for turning all of switching elements 11 to 14 off, and gives control signals GC and GB received to drive circuits 32 and 33. Further, communication circuit 31 receives an ON command signal Son for turning switch S7 on, and gives ON command signal Son received to switch operation circuit 34.

Drive circuit 32 turns each of switching elements 11 and 13 on or off in response to control signal GC. Also, drive circuit 32 turns switching elements 11 and 13 off in response to control signal GB.

Drive circuit 33 turns each of switching elements 12 and 14 on or off in response to control signal GC. Also, drive circuit 33 turns switching elements 12 and 14 off in response to control signal GB.

In response to ON command signal Son, switch operation circuit 34 supplies a current to an excitation coil 18 and turns switch S7 on. During normal operation, switch S7 is in the off (open) state since the current supply to excitation coil 18 is stopped.

Voltage sensor 35 detects an instantaneous value of inter-terminal voltage VDC of capacitor 15 and outputs a signal indicating the value detected to communication circuit 31. Communication circuit 31 transmits a signal indicating the detected value of inter-terminal voltage VDC of capacitor 15 to control device 7.

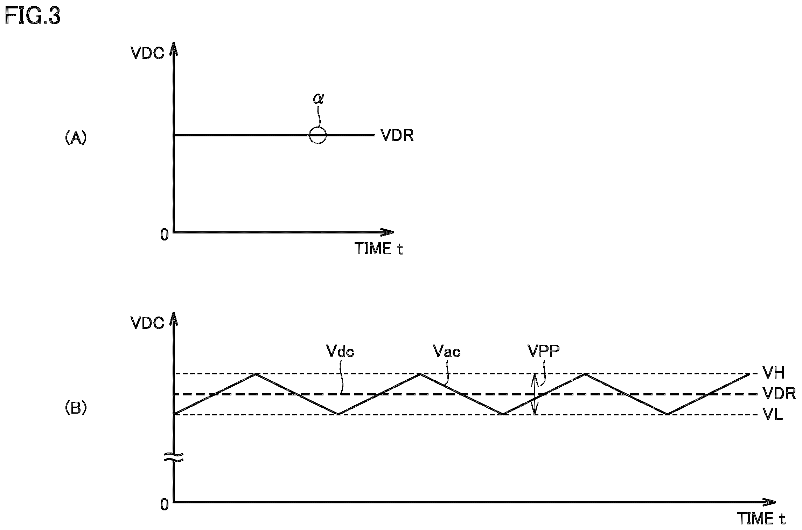

Fig. 3 presents time charts, each illustrating a waveform of inter-terminal voltage VDC of capacitor 15. In Fig. 3, (A) shows the waveform of inter-terminal voltage VDC of capacitor 15 and (B) is an enlarged chart of part α in (A). Fig. 3 shows a case where the capacitance value of capacitor 15 is relatively large, that is, the degradation level of capacitor 15 is small.

Control device 7 generates control signal GC so that inter-terminal voltage VDC of capacitor 15 equals a reference DC voltage VDR. When voltage VDC is lower than reference DC voltage VDR, control device 7 generates control signal GC so that voltage VDC rises and when voltage VDC is higher than reference DC voltage VDR, control device 7 generates control signal GC so that voltage VDC falls.

Thus, voltage VDC does not remain at a fixed value and varies between a minimum value VL, which is lower than reference DC voltage VDR, and a maximum value VH, which is higher than reference DC voltage VDR. In other words, voltage VDC contains a DC component Vdc and an AC component Vac. DC component Vdc agrees with reference DC voltage VDR. AC component Vac is called a ripple voltage and is superimposed on DC component Vdc.

When a differential voltage VPP = VH - VL between maximum value VH and minimum value VL of voltage VDC is a voltage of AC component Vac, voltage VPP of AC component Vac varies, depending on the capacitance value of capacitor 15, that is, the degradation level of capacitor 15.

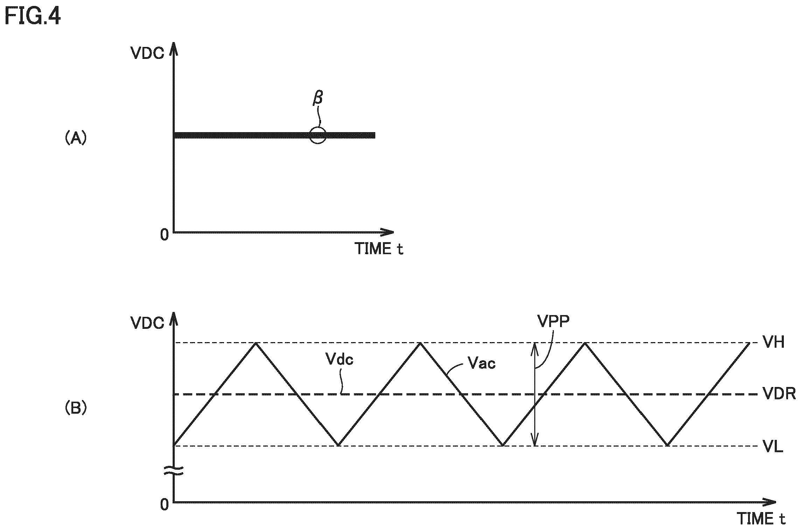

Fig. 4 presents other time charts, each illustrating a waveform of inter-terminal voltage VDC of capacitor 15 and being compared with Fig. 3. In Fig. 4, (A) shows the waveform of inter-terminal voltage VDC of capacitor 15 and (B) is an enlarged chart of part β in (A). Fig. 4 shows a case where the capacitance value of capacitor 15 is relatively small, that is, the degradation level of capacitor 15 is large.

Voltage VPP = VH - VL of AC component Vac in Fig. 4 is increased further than voltage VPP = VH - VL of AC component Vac in Fig. 3. When the degradation level of capacitor 15 increases, the capacitance value of capacitor 15 decreases and voltage VPP of AC component Vac increases. Thus, the degradation level of capacitor 15 can be determined from voltage VPP of AC component Vac.

Referring again to Fig. 2, peak value sensor 36 detects maximum value VH and minimum value VL of inter-terminal voltage VDC of capacitor 15 and outputs signals indicating the values detected to communication circuit 31. Communication circuit 31 transmits signals indicating maximum value VH and minimum value VL to control device 7.

Peak value sensor 36 may detect maximum value VH and minimum value VL directly from capacitor 15 or may detect maximum value VH and minimum value VL from an output signal of voltage sensor 35. Further, peak value sensor 36 may extract AC component Vac from inter-terminal voltage VDC of capacitor 15 using a high pass filter, detect a positive-side peak value and a negative-side peak value of AC component Vac extracted, and obtain the detected positive-side peak value and the detected negative-side peak value as maximum value VH and minimum value VL, respectively.

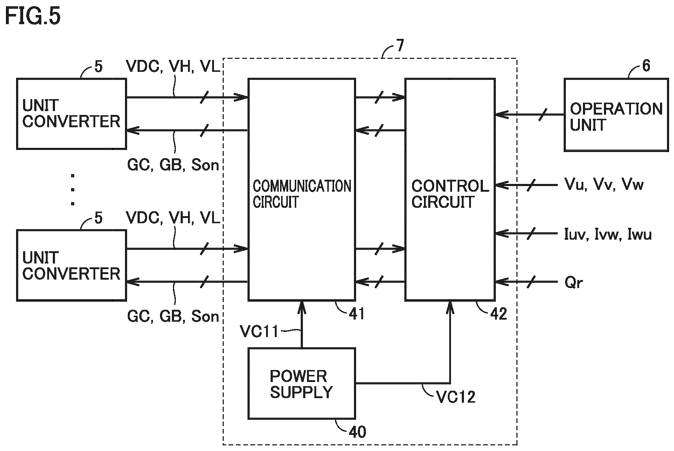

Fig. 5 is a block diagram illustrating a configuration of control device 7. In Fig. 5, control device 7 includes a power supply 40, a communication circuit 41, and a control circuit 42. When power conversion device 1 is connected to power transmission lines 9u, 9v, and 9w (Fig. 1), power supply 40 continuously generates a power supply voltage VC11 for communication circuit 41 and a power supply voltage VC12 for control circuit 42. Thus, communication circuit 41 and control circuit 42 can operate even when power conversion device 1 is stopped.

Communication circuit 41 is driven with power supply voltage VC11 supplied from power supply 40, and gives and receives a signal between 3 × N unit converters 5 included in three arms A1 to A3 (Fig. 1) and control circuit 42. That is, communication circuit 41 receives a signal indicating inter-terminal voltage VDC of capacitor 15, a signal indicating maximum value VH of voltage VDC, and a signal indicating minimum value VL of voltage VDC, which are transmitted from each unit converter 5, and gives the received signals to control circuit 42. Further, communication circuit 41 transmits 3 × N sets of signals GC, GB, and Son generated by control circuit 42 to respective 3 × N unit converters 5.

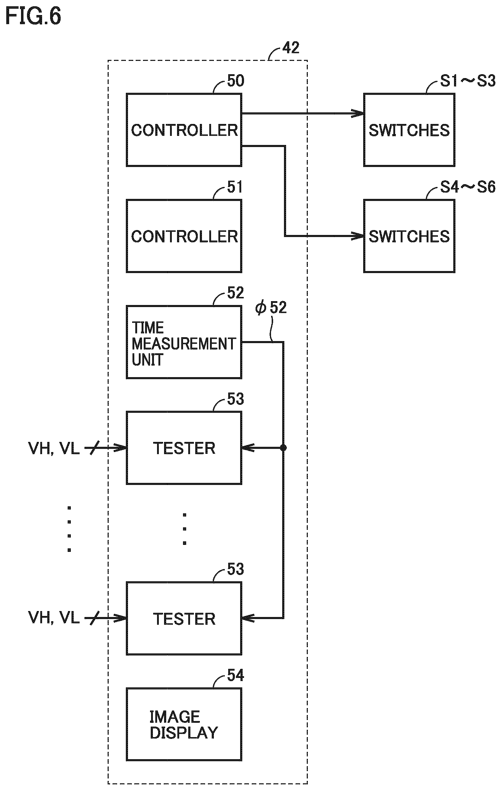

Fig. 6 is a block diagram illustrating a configuration of control circuit 42. In Fig. 6, control circuit 42 includes controllers 50 and 51, a time measurement unit 52, 3 × N testers 53, and an image display 54. Controller 50 controls switches S1 to S6 in accordance with a signal from operation unit 6. That is, when the user of power conversion device 1 operates operation unit 6 (Fig. 1) and the start of power conversion device 1 is commanded, operation unit 6 outputs a signal to command power conversion device 1 to start.

In response to the signal, controller 50 turns switches S1 to S3 on. When switches S1 to S3 are turned on, AC power is supplied from commercial AC power supply 8 to arms A1 to A3 via switches S1 to S3, transformer 2, current limiting resistors R1 to R3, and reactors L1 to L3, and initial charging of capacitor 15 is started.

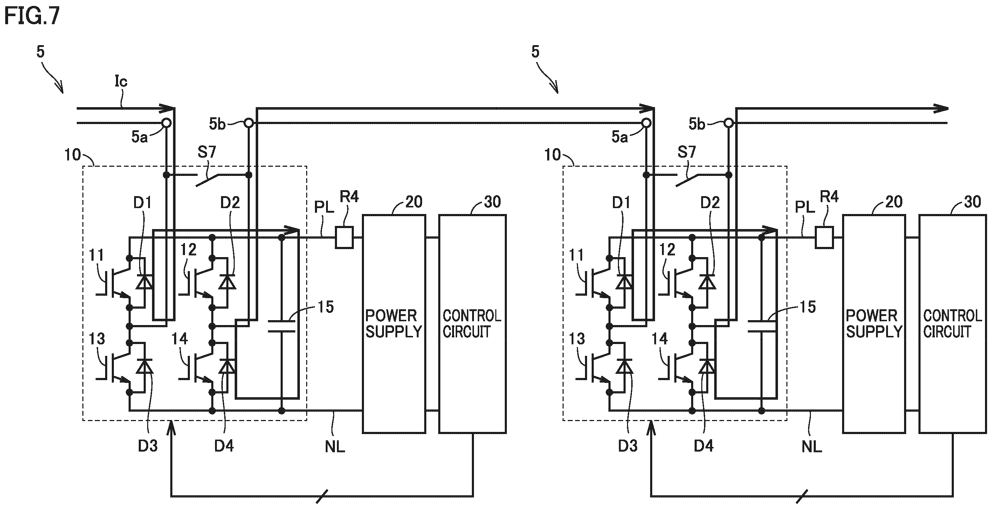

Fig. 7 is a circuit block diagram for explaining the initial charging of capacitor 15. In Fig. 7, two unit converters 5 next to each other are illustrated. Unit converter 5 on the left side in Fig. 7 is unit converter 5 in the first stage in arm A1, and unit converter 5 on the right side in Fig. 7 is unit converter 5 in the second stage in arm A1. At the time of the initial charging, switch S7 is opened and switching elements 11 to 14 are turned off.

When AC voltage Vu of AC line UL (Fig. 1) is higher than AC voltage Vv of AC line VL, as indicated with the arrows in Fig. 7, a current Ic flows through a path from first terminal 5a of unit converter 5 on the left side to second terminal 5b via diode D1, capacitor 15, and diode D4. Capacitor 15 is charged with this current Ic and inter-terminal voltage VDC of capacitor 15 rises.

This current Ic flows from second terminal 5b of unit converter 5 on the left side into first terminal 5a of unit converter 5 on the right side, and flows to second terminal 5b via diode D1, capacitor 15, and diode D4. Capacitor 15 of unit converter 5 on the right side is charged with this current Ic and inter-terminal voltage VDC of capacitor 15 rises.

When, in contrast, AC voltage Vu of AC line UL is lower than AC voltage Vv of AC line VL, current Ic flows through a path from second terminal 5b of unit converter 5 on the right side to first terminal 5a via diode D2, capacitor 15, and diode D3. Capacitor 15 is charged with this current Ic and inter-terminal voltage VDC of capacitor 15 rises.

This current Ic flows from first terminal 5a of unit converter 5 on the right side into second terminal 5b of unit converter 5 on the left side, and flows to first terminal 5a via diode D2, capacitor 15, and diode D3. Capacitor 15 of unit converter 5 on the left side is charged with this current Ic and inter-terminal voltage VDC of capacitor 15 rises. Thus, capacitors 15 of all of unit converters 5 in arms A1 to A3 are charged.

In each of arms A1 to A3, N unit converters 5 are connected in series and accordingly, voltage VDC of capacitor 15 of each unit converter 5 rises up to the value obtained by dividing the peak value of each of the voltages (interphase voltages Vuv, Vvw, Vwu) respectively applied to arms A1 to A3 by N, which is the number of unit converters 5 included in each of arms A1 to A3.

Referring again to Fig. 6, when the initial charging of capacitor 15 ends, controller 50 turns switches S4 to S6 on. Accordingly, short circuits are caused between the respective terminals of current limiting resistors R1 to R3 (Fig. 1), and the three secondary windings of transformer 2 are directly connected to AC lines UL, VL, and WL, respectively.

Further, when the user of power conversion device 1 operates operation unit 6 (Fig. 1) and the stop of power conversion device 1 is commanded, operation unit 6 outputs a signal to command power conversion device 1 to stop. In response to the signal, controller 50 turns switches S1 to S6 off. Thus, the power supply from commercial AC power supply 8 to arms A1 to A3 is stopped.

Further, when the initial charging of capacitor 15 ends, controller 51 generates 3 × N sets of control signals GC and GB on the basis of, for example, three-phase AC voltages Vu, Vv, and Vw from transformer 3, three-phase AC currents Iuv, Ivw, and Iwu detected by current transformers C1 to C3, and 3 × N signals given from 3 × N unit converters 5 via communication circuit 41 and indicating DC voltage VDC, and outputs the generated control signals GC and GB to communication circuit 41.

That is, controller 51 determines three-phase AC currents Iu, Iv, and Iw at the levels dependent on the AC current flowing to AC lines UL, VL, and WL on the basis of AC currents Iuv, Ivw, and Iwu from current transformers C1 to C3. Here, Iu = Iuv - Iwu, Iv = Ivw - Iuv, and Iw = Iwu - Ivw.

Controller 51 determines a reactive power Q on the basis of three-phase AC voltages Vu, Vv, and Vw from transformer 3 and three-phase AC currents Iu, Iv, and Iw mentioned above, and determines a deviation ΔQ = Qr - Q between a reactive power command value Qr and reactive power Q.

Controller 51 generates 3 × N reference DC voltages VDR that respectively correspond to 3 × N unit converters 5 on the basis of, for example, AC currents Iuv, Ivw, and Iwu from current transformers C1 to C3, and three-phase AC voltages Vu, Vv, and Vw from transformer 3.

Controller 51 determines a deviation ΔVDC between each reference DC voltage VDR and DC voltage VDC corresponding thereto. Controller 51 generates three-phase reference AC voltages Vuvr, Vvwr, and Vwur so that the integral value of voltage deviation ΔVDC becomes 0 and the integral value of reactive power deviation ΔQ becomes 0.

In other words, controller 51 performs active current control of each unit converter 5 so that the integral value of voltage deviation ΔVDC becomes 0 and performs reactive current control of each unit converter 5 so that the integral value of reactive power deviation ΔQ becomes 0. On the basis of three-phase reference AC voltages Vuvr, Vvwr, and Vwur, respective unit converters 5 in arms A1 to A3 are operated and DC voltage VDC is caused to equal reference DC voltage VDR and reactive power Q is caused to equal reactive power command value Qr.

Specifically, controller 51 generates 3 × N sets of control signals GC and GB according to, for example, pulse width modulation (PWM) control, so that three-phase AC voltages Vuv, Vvw, and Vwu output from arms A1 to A3 equal three-phase reference AC voltages Vuvr, Vvwr, and Vwur.

Communication circuit 41 transmits 3 × N sets of control signals GC and GB generated by controller 51 to 3 × N unit converters 5 included in arms A1 to A3. In each unit converter 5, control signals GC and GB are received by communication circuit 31 and given to drive circuits 32 and 33. Drive circuits 32 and 33 turn switching elements 11 to 14 on and off in accordance with control signals GC and GB. Thus, inter-terminal voltage VDC of capacitor 15 is converted into an AC voltage.

When, on the basis of 3 × N voltages VDC or the like, abnormality such as a short-circuit fault of a switching element is detected in any unit converter 5 of 3 × N unit converters 5, controller 51 outputs ON command signal Son of switch S7 to this unit converter 5 with the fault. This ON command signal Son is given to switch operation circuit 34 of unit converter 5 with the fault via communication circuits 41 and 31.

In response to ON command signal Son, switch operation circuit 34 supplies a current to excitation coil 18 and turns switch S7 on. Thus, a short circuit is caused between first terminal 5a and second terminal 5b of unit converter 5 with the fault. Information to identify unit converter 5 with the fault is displayed on, for example, the image display of operation unit 6.

Further, when the user of power conversion device 1 operates operation unit 6 (Fig. 1) and the stop of power conversion device 1 is commanded, operation unit 6 outputs a signal to command power conversion device 1 to stop. In response to the signal, the operation of unit converter 5 by controller 51 is stopped and switching elements 11 to 14 of all of unit converters 5 are turned off.

Time measurement unit 52 measures time during which unit converter 5 is operated by controller 51 and outputs a signal ϕ52 on the basis of the measurement result. Normally, signal ϕ52 is caused to be at an "L" level, which is a deactivation level. Only during predetermined time in a predetermined cycle (of one year for example), signal ϕ52 is caused to be at an "H" level, which is an activation level. Signal ϕ52 is given to each tester 53.

Further, tester 53 tests corresponding capacitor 15 in accordance with the signal indicating maximum value VH and the signal indicating minimum value VL from corresponding unit converter 5, and signal ϕ52 from time measurement unit 52.

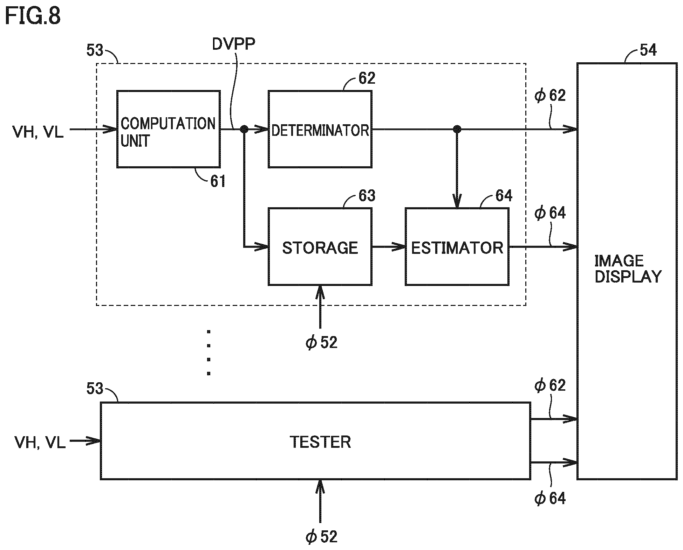

Fig. 8 is a block diagram illustrating a configuration of tester 53. In Fig. 8, tester 53 includes a computation unit 61, a determinator 62, a storage 63, and an estimator 64. Computation unit 61 computes differential voltage VPP = VH - VL between maximum value VH and minimum value VL indicated by the signals from corresponding unit converter 5, and gives a signal DVPP indicating voltage VPP computed to determinator 62 and storage 63.

Determinator 62 compares the levels of voltage VPP indicated by signal DVPP from computation unit 61 and a threshold voltage Vt, and outputs a signal ϕ62 indicating the comparison result. When voltage VPP is lower than threshold voltage Vt, signal ϕ62 is caused to be at the "L" level. When voltage VPP is higher than threshold voltage Vt, signal ϕ62 is caused to be at the "H" level. Threshold voltage Vt is determined in advance by experiment.

Signal ϕ62 at the "L" level indicates that the degradation level of corresponding capacitor 15 is small and corresponding capacitor 15 does not need to be replaced with a new one. A signal ϕ53 at the "H" level indicates that the degradation level of corresponding capacitor 15 is large and corresponding capacitor 15 needs to be replaced with a new one. Signal ϕ62 is given to estimator 64 and image display 54.

Storage 63 determines whether output signal ϕ52 of time measurement unit 52 (Fig. 6) is at the "H" level. When signal ϕ52 is at the "H" level, storage 63 takes in output signal DVPP of computation unit 61 and stores signal DVPP taken in. When signal ϕ52 is at the "L" level, storage 63 does not store output signal DVPP of computation unit 61. Signals DVPP are sequentially stored in storage 63.

When output signal ϕ62 of determinator 62 is at the "L" level, that is, it is determined that corresponding capacitor 15 does not need to be replaced with a new one, estimator 64 estimates a replacement timing of capacitor 15 according to signals DVPP stored in storage 63 and outputs a signal indicating the estimation result.

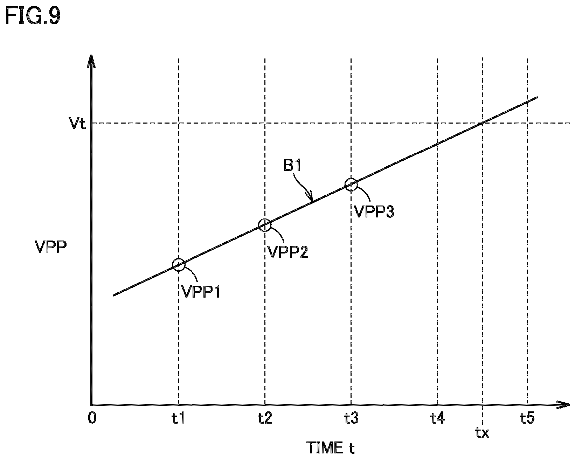

Fig. 9 is a chart for explaining the operation of estimator 64. It is assumed that output signal ϕ52 of time measurement unit 52 is caused to be at the "H" level m times and m signals DVPP are stored in storage 63, and m represents an integer larger than or equal to two. Fig. 9 illustrates a case where m = 3.

Estimator 64 reads m signals DVPP from storage 63 and converts the read m signals DVPP into voltages VPP1 to VPPm of AC component Vac. Subsequently, estimator 64 causes voltages VPP1 to VPPm to be written in Fig. 9, where the horizontal axis indicates time and the vertical axis indicates voltage VPP.

Subsequently, estimator 64 causes an approximate curve B1 passing through voltages VPP1 to VPPm to be drawn and determines time tX at which curve B1 exceeds threshold voltage Vt. Estimator 64 estimates the timing at which the operation time of power conversion device 1 reaches tX as the timing to replace capacitor 15 with a new one. Estimator 64 outputs a signal ϕ65 indicating the estimation result to image display 54.

Image display 54 displays the determination result indicated by output signal ϕ62 of determinator 62 and the estimation result indicated by output signal ϕ65 of estimator 64. Image display 54 displays the determination result and the estimation result for each of 3 × N capacitors 15.

Image display 54 may display information to identify capacitor 15 determined as being required to be replaced with a new one or information to identify capacitor 15 with an estimated replacement timing that is close. Also, image display 54 may be included in operation unit 6 (Fig. 1).

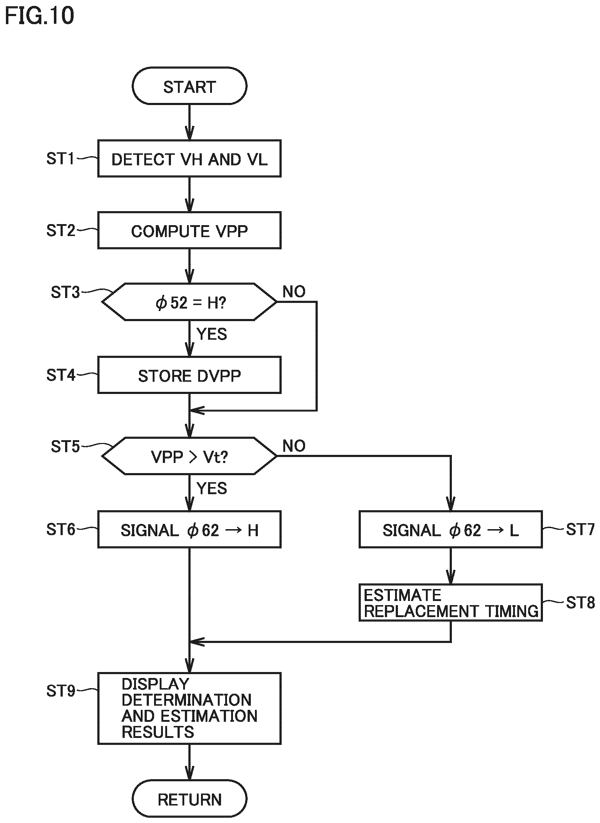

Fig. 10 is a flowchart illustrating a testing method of capacitor 15. In step ST1, peak value sensor 36 (Fig. 2) detects maximum value VH and minimum value VL of inter-terminal voltage VDC of capacitor 15. The signals indicating maximum value VH and minimum value VL are transmitted to computation unit 61 (Fig. 8) of tester 53 via communication circuits 31 and 41 (Figs. 2 and 5).

In step ST2, computation unit 61 computes differential voltage VPP = VH - VL between maximum value VH and minimum value VL. In step ST3, storage 63 (Fig. 8) determines whether output signal ϕ52 of time measurement unit 52 (Fig. 6) is at the "H" level. Signal ϕ52 is a signal that is caused to be at the "H" level only during predetermined time in a predetermined cycle.

When signal ϕ52 is at the "H" level, in step ST4, signal DVPP indicating differential voltage VPP is stored in storage 63. When signal ϕ52 is not at the "H" level, in step ST5, determinator 62 determines whether voltage VPP indicated by signal DVPP is higher than threshold voltage Vt.

When VPP > Vt is satisfied, in step ST6, determinator 62 causes signal ϕ62 to be at the "H" level. Signal ϕ62 at the "H" level indicates that corresponding capacitor 15 needs to be replaced with a new one.

When VPP > Vt is not satisfied, in step ST7, determinator 62 causes signal ϕ62 to be at the "L" level. Signal ϕ62 at the "L" level indicates that corresponding capacitor 15 does not need to be replaced with a new one.

In step ST8, estimator 64 estimates a timing to replace corresponding capacitor 15 with a new one according to signals DVPP stored in storage 63. In step ST9, image display 54 displays the determination result of determinator 62 and the estimation result of estimator 64. Steps ST1 to ST9 are performed repeatedly.

The user of power conversion device 1 determines whether to replace capacitor 15 on the basis of the display result of image display 54. That is, when it is determined that capacitor 15 is required to be replaced with a new one, the user stops power conversion device 1 and replaces capacitor 15 with a new one. Further, when a timing to replace capacitor 15 with a new one is estimated, the user prepares capacitor 15 that is new and needed at the timing.

As described above, in the present embodiment, tester 53 is provided so as to correspond to a respective one of unit converters 5, and when voltage VPP of AC component Vac contained in inter-terminal voltage VDC of corresponding capacitor 15 is higher than threshold voltage Vt, this tester 53 determines that corresponding capacitor 15 needs to be replaced with a new one. Thus, it can be determined whether each of 3 × N capacitors 15 included in 3 × N unit converters 5 needs to be replaced with a new one while power conversion device 1 is being operated.

Even when it is determined that capacitor 15 does not need to be replaced with a new one, a timing to replace capacitor 15 with a new one is estimated. Thus, capacitor 15 that is new can be prepared at the estimated timing and lack of capacitor 15 that is new can be prevented before it occurs.

It should be understood that the herein-disclosed embodiments are presented by way of illustration and example in every respect and are not to be taken by way of limitation. The present invention is not defined by the description above but is defined by the claims, and is intended to include all changes within the purport and scope equivalent to the claims.

### REFERENCE SIGNS LIST

1 power conversion device; S1 - S6 switch; 2, 3 transformer; R1 - R3 current limiting resistor; UL, VL, WL AC line; C1 - C3 current transformer; L1 - L3 reactor; A1 - A3 arm; 5 unit converter; 6 operation unit; 7 control device; 8 commercial AC power supply; 9u, 9v, 9w power transmission line; 10 main circuit; 11 - 14 switching element; PL, NL DC line; 15 capacitor; 18 excitation coil; R4 resistance element; 20, 40 power supply; 30, 42 control circuit; 31, 41 communication circuit; 32, 33 drive circuit; 34 switch operation circuit; 35 voltage sensor; 36 peak value sensor; 50, 51 controller; 52 time measurement unit; 53 tester; 54 image display; 61 time measurement unit; 62 determinator; 63 storage; 64 estimator.

## Claims

1. A power conversion device comprising:
a power converter that includes a plurality of unit converters connected in series and is connected to an AC power supply; and
a control device that outputs a control signal to each of the plurality of unit converters,
each of the plurality of unit converters including
a main circuit including a capacitor that accumulates DC power, a rectification element that converts AC power supplied from the AC power supply into DC power and supplies the DC power to the capacitor, and a switching element that converts the DC power of the capacitor into AC power and supplies the AC power to the AC power supply,
a voltage sensor that detects an inter-terminal voltage of the capacitor, and
a drive circuit that drives the switching element in accordance with the control signal,
the inter-terminal voltage of the capacitor containing a DC component and an AC component,
the control device including
a controller that generates the control signal so that the inter-terminal voltage of the capacitor detected by the voltage sensor equals a reference DC voltage and an AC output voltage of the power converter equals a reference AC voltage, and
a plurality of testers that are provided so as to respectively correspond to the plurality of unit converters, each of the plurality of testers testing the capacitor included in the unit converter to which the tester corresponds,
each of the plurality of testers including a determinator that determines that the capacitor corresponding to the tester needs to be replaced with a new capacitor when a voltage of the AC component contained in the inter-terminal voltage of the capacitor corresponding to the tester is higher than a threshold voltage.

2. The power conversion device according to claim 1, wherein the voltage of the AC component is a differential voltage between a maximum value and a minimum value of the inter-terminal voltage of the capacitor.

3. The power conversion device according to claim 1, wherein
each of the plurality of unit converters further includes a peak value detector that detects a maximum value and a minimum value of the inter-terminal voltage of the capacitor and outputs respective signals indicating the values detected,
each of the plurality of testers further includes a computation unit that computes a differential voltage between the maximum value and the minimum value indicated by the respective signals output from the peak value detector, and
each of the determinators determines that the capacitor corresponding to the tester needs to be replaced with a new capacitor when the differential voltage computed by the computation unit is higher than the threshold voltage.

4. The power conversion device according to claim 1, further comprising a display that displays respective determination results of the determinators.

5. The power conversion device according to claim 1, wherein each of the plurality of testers further includes
a storage that sequentially stores the voltage of the AC component in a predetermined cycle, and
an estimator that estimates a timing to replace the capacitor corresponding to the tester with a new capacitor based on what is stored in the storage when the voltage of the AC component is smaller than the threshold voltage.

6. The power conversion device according to claim 5, further
comprising a display that displays respective estimation results of the estimators.
